# EUROPEAN PATENT SPECIFICATION

(11) **EP 1 705 463 B1**
(45) Date of publication and mention of the grant of the patent: **22.06.2011**
(21) Application number: 05425168.1
(22) Date of filing: 23.03.2005
(51) Int. Cl.: G01F 1/688, G01F 23/24, G01F 23/22

(54) **Sensing device for measuring a fluid flow and a liquid level**
Sensor zur Flüssigkeitsmessung und Füllstandsmessung
Capteur de mesure de débit de fluide et de détection de niveau

(43) Date of publication of application: 27.09.2006
(73) Proprietor: Lanzani, Federico, 25020 Azzano Mella (Brescia) (IT); Noli, Canzio, 43011 Busseto (Parma) (IT); Ariazzi, Giancarlo, 25020 San Gervasio (Brescia) (IT)
(72) Inventor: Lanzani, Federico, 25020 Azzano Mella (Brescia) (IT); Noli, Canzio, 43011 Busseto (Parma) (IT); Ariazzi, Giancarlo, 25020 San Gervasio (Brescia) (IT)
(74) Representative: Botti, Mario

(56) References cited:
- DE-A1- 19 610 885
- GB-A- 1 239 622
- US-A- 5 056 047

## Description

### Field of application

In its broadest aspect, the present invention concerns a sensing device for measuring the flow of a fluid and also, in particular, for detecting the presence or level of thick fluids or liquids.

More specifically, the invention concerns a sensing device of the above type, which comprises a temperature sensor designed to be immersed in the fluid flow.

The invention also relates to a method for measuring the flow of a fluid.

The invention concerns the manufacturing of a family of sensors for measuring even the sole movement of fluids and/or detecting the presence of liquids and the following description refers to this field of application merely for the purpose of simplifying the exposition.

### Prior art

As it is well known to the skilled in the art, the measure of the fluid flow through the temperature can be carried out by exploiting two principles of physics: the dissipative thermodynamic principle and the calorimetric principle.

The dissipative thermodynamic principle is based on the difference between the fluid temperature and that of a body immersed therein, which has been heated with a constant, or at least a known, quantity of energy. This differential depends only on the conditions of heat exchange between the body and the fluid, and it is therefore functionally linked to the fluid speed as well as to its density.

The calorimetric principle is based on the temperature difference set up in a fluid flow between the upstream and downstream of the heating zone in response to the application of a known quantity of energy. The applicability of this principle, however, requires the thermal uniformity of the fluid.

To a good approximation, the dissipative thermodynamic principle detects the fluid speed with respect to the heated body.

The calorimetric principle, on the other hand, detects the fluid mass flow.

The present invention exploits the dissipative thermodynamic principle.

The known technique already puts forward some solutions, which apply the dissipative thermodynamic principle to measuring the motion of a fluid.

Devices in fact exist based on two resistive sensors, one of which is heated and the other is used to detect the fluid temperature. A known device is described for instance in the US patent No. 5,056,047.

Known devices have some drawbacks in terms of cost, reliability of measurement, and possibility of amplifying the field of application of the sensors made by exploiting the thermodynamic principle.

Furthermore, known devices are affected by measurement offsets, and require laborious and delicate calibration interventions.

The present invention remedies these drawbacks.

As stated above, the calorimetric principle provides a measurement of the temperature difference set up in a fluid by the introduction of a given quantity of energy between a point upstream and another point downstream of the heating area. The principle applies provided that the fluid is thermally uniform.

The known technique already puts forward some solutions, which apply the calorimetric principle to measuring the motion of a fluid.

For instance, Patent GB 1116178 describes a device for measuring the flow of a fluid, which comprises three tubular sections made with two alternated metals having different thermoelectric properties. In this way two junctions of thermocouple have been formed which are positioned at a predetermined distance from one another with an intermediate section associated with a heater and subjected to heating.

Though it has various advantages, this device put forward by the known technique is not without drawbacks due both to the complexity of the manufacturing and coupling of the different parts and to the considerable total mass, which limits its application due to the intrinsic thermal inertia.

Moreover it is necessary to supply the heating element with a considerable power when in operation.

It should also be pointed out that when gaseous fluids need to be measured the device sensitivity is considerably reduced due to the thermal masses involved to such an extent that it has proved inadequate for properly measuring low fluid speeds.

The technical problem underlying the present invention is that of devising a sensing device and corresponding method for measuring the flow of a fluid, with such respective structural and functional characteristics as to provide reliable measurements at greatly reduced cost.

Another aim of the invention is that of providing a sensing device that is tough, reliable, economical and capable of being used in a variety of applications, also only as sensor for detecting the presence or the fluid level.

### Summary of the invention

The solution idea underlying the present invention is that of providing at least one thermocouple and heating one junction of such thermocouple in a same sensing device.

On the basis of such solution idea, the technical problem is solved by a sensing device as previously indicated, characterized in that the temperature sensor is at least one thermocouple and that the sensing device includes means for heating one junction of said thermocouple.

The invention also concerns a measuring method defined in Claim 14 and following.

The features and advantages of the device and method according to the invention will be clear from the following description of an embodiment thereof, given with reference to the attached drawings.

### Brief description of the Figures

Figure 1 shows a schematic view of a sensing device made in accordance with the known technique;
Figures 2a and 2b show respective perspective schematic views of two opposite sides of a sensor made in accordance with the present invention;
Figure 2c shows a perspective schematic view of a further embodiment of the sensing device in accordance with the present invention;
Figure 3 is a graph of the temperature difference trend between two junctions of a thermocouple and the speed of the air in m·sec⁻¹;
Figure 4 shows a perspective view of an application of the sensing device of Figs. 2a and 2b;
Figure 5 shows a perspective view of the sensor of Figs. 2a and 2b associated with an electronic control circuit.

### Detailed description

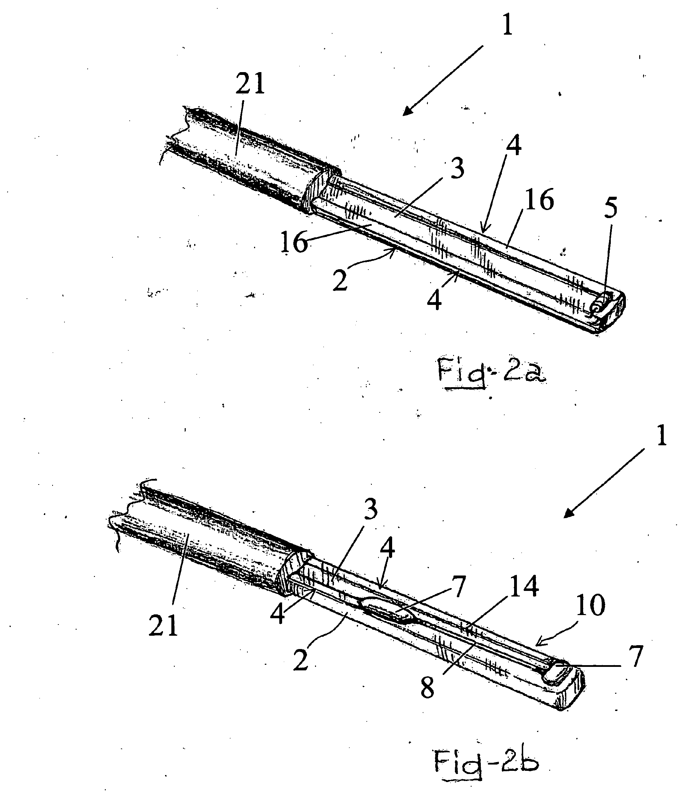

Referring to these figures, and particularly to the example of Figs. 2a and 2b, a sensing device made in accordance with the present invention is generally and schematically shown with reference number 1.

The device (1) is particularly but not exclusively intended for measuring the flow of a fluid, whether liquid or gaseous, so as to indirectly obtain also a presence indication or the measure of a level reached by said fluid. In this case, the sensor (1) may be used as presence sensor or as level sensor in a variety of applications.

The physical principle on which the present invention is based is that of the thermocouple as an element for measuring a differential temperature.

It is worth recalling that the thermocouple, by its nature, consists of an electric circuit comprising a couple of metal alloys which, when a temperature difference is applied in correspondence with a junction between the two alloys, generates a voltage signal proportional to that temperature difference.

The device of the present invention is based on a differential measurement, without necessarily requiring absolute measures.

The thermocouple is, by its nature, a differential measuring unit *par excellence* and the signal emitted is a direct result of a temperature difference between the two sensitive junctions of the thermocouple, thus it is not the result of an algebraic sum of two absolute temperatures.

The use of the thermocouple as differential measuring unit between the heated point and the reference temperature (of the fluid) implies considerable advantages, technical and economic, which will become clear as the description proceeds.

The device 1 comprises a support strip 2 preferably made of an electrically insulating material.

The strip 2 is essentially an elongated part of a printed circuit, for instance of the kind normally used for mounting electronic components, on whose surface 3 some conductive tracks 4 of metal are made, as shown in Figure. 2a or 2b.

At least one 14 of said tracks 4 made on the surface 3 of the strip 2 is a conductive path and, in substance, forms a first conductor of a thermocouple 10 hereafter described.

The tracks 4 are made of copper and, in addition to the track 14, they also provide electrical connections 16 for supplying heating means 5 which may be seen in Figure 2a and are arranged in the sensor 1 close to the thermocouple 10. The means 5 may be a simple SMT electrical resistor, which is a small cube of a few cubic mm with two opposite metallized faces whereon the contact with the welding alloy is provided, or a resistor with discrete component.

Obviously, nothing prevents the means 5 from being located also on the same face of the strip 2 whereon the thermocouple 10 is provided.

Some pads 7 are formed onto the strip 2 for welding a portion or a section of conductive wire 8, which is the second conductive element of the thermocouple 10.

The conductive wire 8 is preferably a wire made of constantan, which is a copper/nickel alloy; but there is no reason why the wire 8 should not be a foil of the same material.

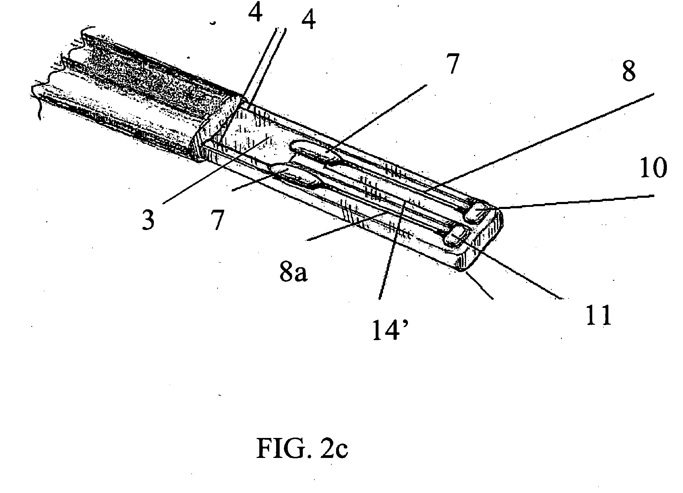

Advantageously according to the present invention, in a further embodiment shown for example in Figure 2c, plural thermocouples can be provided, connected in series with said thermocouple 10 to form a thermopile. In this case the series-connected junctions of the plural thermocouples are those immersed in the fluid at the same temperature.

Fig. 2c shows in fact a second thermocouple 11 made on the same surface 3 of the strip 2 whereon the thermocouple 10 is present. On such surface 3 an additional track 14a is provided enabling the thermocouples 10 and 11 to be connected in series, and a second constantan conductor 8a, which, together with track 14a, completes the structure of the second thermocouple.

Obviously, in this case the copper tracks 4 refer to ends of the first thermocouple 10 and of the second thermocouple 11, connected to form the thermopile.

The several junctions of the thermocouples 10, 11 are made of welds with welding alloys in correspondence with the pads 7.

As previously seen, the sensing device 1 of the present invention comprises at least one thermocouple, the one indicated with number 10, made by means of at least one pair of welds between the conductive track 14 and the conductor 8.

However, plural contacts could be provided between the conductive track 14 and the wire 8 for making corresponding thermocouples, for instance as the one previously described with number 11, for applications which will be hereafter described.

In correspondence with the junctions, corresponding copper/constantan thermocouples will be formed, which are characterized by an electrical response of around 40 micro volt/ C°.

The weld between the copper and the constantan is excellent, because of these two metals compatibility with the welding alloys normally used in the electronic field.

Advantageously according to one feature of the present invention, the plural thermocouples are connected in series with each other to form a thermopile.

Essentially, the voltage signal will be equal to zero if the two junctions are at the same temperature, otherwise it will be approximately 40 µV multiplied by difference of degrees °C between the temperatures of the two junctions in °C.

In accordance with the method of the present invention, if one junction of the thermocouple 10 is heated by means of a heat source a temperature difference will be set up between the conductor junctions 14 and 8, which is a function exclusively of the conditions of heat exchange with the surrounding fluid.

Now the conditions of exchange between a solid and a fluid licking it essentially depend on the type and speed of the fluid; consequently the temperature difference between the junctions of the thermocouple 10, and the resulting potential difference set up across the same will depend on the fluid speed, i.e. on its rate of flow, and on the type of fluid licking the heated part, i.e. on its level.

In the application mode described herein, the sensor 1 has just one of its two junctions heated.

As a result, since the heat exchange depends on the speed of the fluid licking the thermocouple but also on its density, the passage of the fluid will affect the temperature difference between the thermocouple junctions and thus the device 1 can be used to measure the speed of a fluid as if it were an anemometer or a flow meter.

Similarly the sensor device 1 can detect the presence or absence of a thicker fluid or a liquid, in this case operating as a level indicator.

The differential signal may be amplified and made linear by means of various known electronics techniques, so as to obtain a measure proportional to the fluid's speed, or to provide an on/off signal when a certain threshold is overcome.

The sensor 1 is very simple to make, and enables an integrated differential sensor to be obtained, which is adapted for mass-producing by using well-established techniques for electronic circuit-board assembly. Advantageously, the connection of the sensor to the electronic circuitry, which is intended to process the signal coming from the sensor, is obtained with a very small number of conductors, even just two for the heating means 5 and another two for the thermocouple 10.

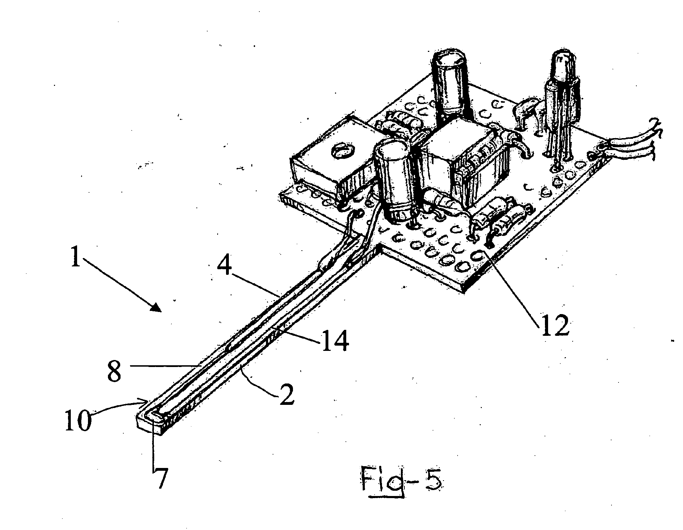

Still in accordance with the present invention, the sensing device 1 can be connected to an electronic circuit 12, which amplifies the signal from the thermocouple 10 and supplies current to a heater, as shown in figure 5 in such a way as to maintain the temperature difference between the thermocouple junctions at a predetermined value.

In this way the device 1 may be used indirectly to regulate the power supplied to the heater, which is approximately proportional to the fluid speed.

For the sake of completeness, an embodiment will now be described in detail, in which the strip 2 consists of a type FR4 Vetronite printed circuit with four copper tracks being 35 microns thick. The strip 2 in this case is 40mm long, 3mm wide and 1.6mm thick.

On one side of this strip 2 the conducting tracks 4 have been made which enable the mounting of the heating resistance 5 and on the other side the welds of the constantan wire 8 having diameter of 0.25mm.

The distance between the two welding points of the constantan wire 8 is of 13mm.

The junctions of the thermocouple 10 are formed in the welding points between the wire and the copper pads 7. A tiny 1kΩ SMT resistance 5 has been mounted on the surface being opposite to the pad at one end of the printed circuit.

When the resistance is supplied with 12 volts and the sensor 1 is placed in still air, the voltage output from the thermocouples stabilizes after a few tens of seconds at 1mV, corresponding to a temperature difference of around 25°C between the two junctions.

If the sensor 1 is subjected to an air flow corresponding to a speed of 3.2m·sec⁻¹ as measured with an anemometer placed near the sensor, with a room temperature of 15°C, the output falls to 300 micro volts (0.3mV), corresponding to a differential temperature of around 7.5°C.

Table 1 below shows the detected values output from the sensor 1 according to the invention and the temperature difference between the two junctions (T₂ - T₁) of the thermocouple 10, in correspondence with different values of the air flow hitting the sensor itself:

**Table 1**

| flow m·sec⁻¹ | Sensor mV | T₂ - T₁ °C |
|---|---|---|
| 0 | 1 | 25 |
| 0.2 | 0.8 | 20 |
| 0.5 | 0.7 | 17.5 |
| 0.9 | 0.6 | 15 |
| 1.4 | 0.5 | 12.5 |
| 2 | 0.4 | 10 |
| 3.2 | 0.3 | 7.5 |

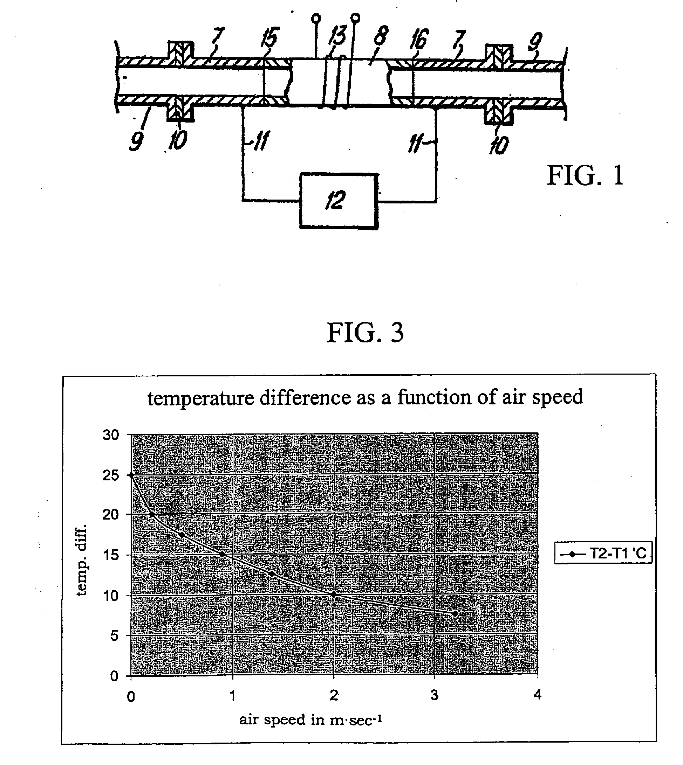

The graph in Figure 3 shows the trend of the temperature difference between the two junctions and the air speed in m·sec⁻¹.

Surprisingly, the output of the sensor 1 is unaffected, for equal air flow, by different position and whether it is positioned parallel or perpendicular to that flow, provided the junctions are not on the (downstream) side facing away from the direction of flow.

This makes it possible to choose one of many different positions for the sensor, to suit each of a very wide range of measurement requirements.

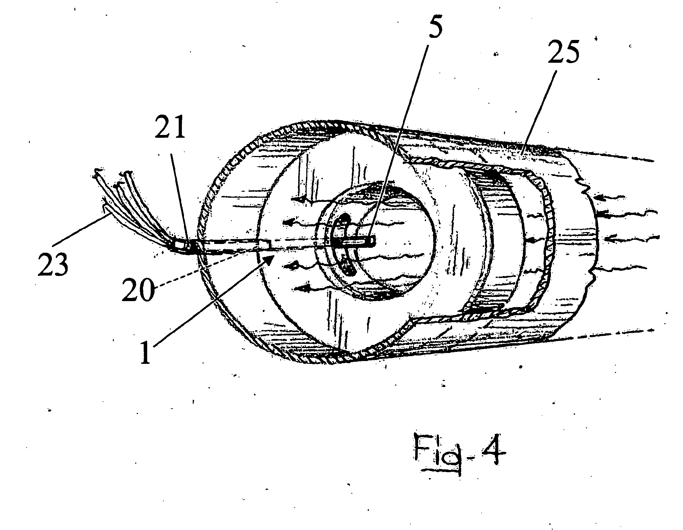

Fig. 4 shows one way of applying a sensor made in accordance with the invention, wherein a lower resistance for the heater 5 than in the previous embodiment, for example of 500Ω, is provided.

The sensor 1 is electrically insulated with a transparent varnish and inserted into a protective sleeve 20, for instance a small tube (30mm long, 4mm outside diameter) in 0.25mm-thick steel.

Thermal contact between the two thermocouples' junctions and the metal of the small tube is assured by means of a drop of silicone grease of the type normally used for enhancing thermal conduction between active electronic components and heat-dispersion fins.

The sensing device 1 is completed by the addition of a section of heat shrinkable sleeving 21, which unites the end portion of the small tube, the printed circuit 2 associated with the sensor, and the connecting wires 23.

In this configuration, the sensor was inserted into a section of pipe 25, perpendicular to the flow, in order to measure the flow of a liquid, in this case water.

With a 12V supply to the resistance, a reading of 200µV, corresponding to a difference of 5°C, was obtained in still water. The reading fell to 50µV, corresponding to 1.2°C, when the liquid was flowing at 1 liter/min; and to 20µV, corresponding to 0.5°C, when the liquid was flowing at 3 liters/min.

Another advantage of the sensing device made according to this invention is its intrinsic capacity to detect the presence or absence of a liquid or thick fluid: the temperature difference between the two junctions of the thermocouple 10 when the liquid is absent is much greater than when the liquid is present, for example reaching over 40°C, corresponding to 1.6mV.

As a result, the electronic circuitry associated with the sensor is well capable of detecting the presence of the fluid and measuring its flow if present, at a very low cost.

Moreover, since the electrical output is in essence inversely proportional to the flow, the sensor 1 shows very high sensitivity when flow levels are very low.

To ensure a full description, another example of application of the sensing device according to the invention should be noted for the purpose of detecting the presence of a liquid in a tank or reservoir.

The use of the sensor 1 makes it possible to avoid the drawbacks of conduction-based systems with electrodes, which readily become encrusted, or of other devices using moving parts, which can break or get stuck.

It is an advantage of the sensing device 1 that, inserted into the protective sleeve 20 it can be positioned vertically in a tank.

When liquid is not present, the temperature difference between the two junctions of the sensor's thermocouple 10 reaches 40°C and the sensor gives an output voltage of 1.6mV.

When one end of the sensor 1, the lower end of the sensor placed in the tank, is bathed in the liquid then the output voltage falls sharply to a few hundred micro volts, revealing the presence of a liquid or fluid characterized by the highest density.

Referring in particular to Fig. 5, the support strip 2 of the sensor 1 is associated with a printed circuit 12 on which is mounted the electronic circuitry for amplifying the signal.

The support strip 2 and printed circuit 12 can form a single device on a single printed circuit board, capable of producing a signal, which corresponds to the speed of the air flowing over the sensor 1.

Such a device can, for instance, be used to report insufficient air-flow in a pipe, conduit or chimney due to blocked filters, or the failure of a fan.

The printed circuit 12 associated with the sensor 1 can if necessary be the same as that containing the electronics, making for considerable cost savings in assembly and operational testing of the device.

It is a further advantage that the printed circuit which contains the sensor and electronics together can be made in other ways than that shown in Fig. 5, and in particular that it is possible to provide for a single printed circuit which, without continuity solution, combines the strip 2 as a substantial extension integral with the printed circuit 12, in such a way as to form a compact, miniaturized single device which can readily be inserted into a hollow space designed for it in the final application itself.

The device and method in accordance with this invention therefore solve the technical problem, and succeed in providing many advantages, among which we may note its simplicity and reliability of measurement, obtained at a very low cost, and its ability to report other quantities related to a change in the temperature difference between two junctions of a thermocouple, at least one of which is heated.

The following are some of the more noteworthy advantages:
1. the ability to take a reading which is directly proportional to the temperature difference between the two junctions in question
2. no measurement offset, and hence no need for laborious calibrations;
3. a very broad range of applications;
4. very low cost, and ease of manufacture.

## Claims

1. Sensing device (1) for measuring the flow of a fluid and/or the presence and/or level of a liquid, which comprises a temperature sensor designed to be immersed in the fluid flow or in the liquid, **characterized in that** the temperature sensor is at least one thermocouple (10) comprising at least one pair of junctions and that the sensing device includes heating means (5) for heating only one junction of that thermocouple, and a support strip (2) on which said temperature sensor and said heating means (5) are mounted.

2. Device in accordance with Claim 1, **characterized in that** it comprises a support strip (2), and **in that** said thermocouple is housed onto one surface (3) of that strip (2).

3. Device in accordance with Claim 2, **characterized in that** said strip (2) is a portion of printed circuit.

4. Device in accordance with Claim 2, **characterized in that** said strip (2) is an elongated portion of printed circuit.

5. Device in accordance with Claim 2, **characterized in that** onto said surface (3) at least one conductive track (14) is formed which represents a first conductor of said thermocouple and is associated with a conductor (8) which represents a second member of said thermocouple.

6. Device in accordance with Claim 2, **characterized in that** onto said strip (2) metal tracks (4) are made for supplying current to said heating means (5).

7. Device in accordance with Claim 6, **characterized in that** said heating means (5) are a discrete electrical resistor, mounted near one end of said strip (2).

8. Device in accordance with Claim 1, **characterized in that** it comprises at least one additional thermocouple (11), connected in series to said thermocouple so as to form a thermopile.

9. Device in accordance with Claim 5, **characterized in that** the conductor (8) is wire made of constantan.

10. Device in accordance with Claim 5, **characterized in that that** the conductor (8) is a constantan foil.

11. Device in accordance with Claim 1, **characterized in that** it is inserted into a protective casing (20).

12. Device in accordance with Claim 1, **characterized in that** it comprises an electronic circuit portion (12) associated with the sensor to detect and amplify the electronic signal emitted from the thermocouple (10) and supply said heating means (5).

13. Device in accordance with Claim 12, **characterized in that** said electronic circuit portion (12) is mounted on a printed circuit extension of the strip (2).

14. Method for measuring the flow of a fluid and/or the presence and the level of a liquid, by means of at least one temperature sensor mounted on a support strip (2) and immersed in the fluid flow or the liquid, **characterized by** the step of: providing at least one thermocouple (10) as the temperature sensor (1), comprising at least one pair of junctions;
- heating only one junction of said thermocouple through heating means (5) mounted on said support strip (2) and
- detecting a differential electrical signal emitted from said thermocouple.

15. Method in accordance with Claim 14, **characterized in that** the sensor is immersed in a tank for the detection of the level of a dense fluid or a liquid.

## Patentansprüche

1. Detektorvorrichtung (1) zum Messen des Durchflusses eines Fluids und/oder der Anwesenheit und/oder des Füllstandes einer Flüssigkeit, das einen Temperatursensor umfasst, der ausgelegt ist, um in den Fluidfluss oder in die Flüssigkeit eingetaucht zu werden, **dadurch gekennzeichnet, dass** der Temperatursensor aus mindestens einem Thermoelement (10) besteht, das mindestens ein Paar von Kontaktstellen umfasst, und dass die Detektorvorrichtung zum Erwärmen lediglich einer Kontaktstelle des Thermoelements Heizmittel (5) umfasst, und eine Aufnahmeleiste (2), auf der der Temperatursensor und die Heizmittel (5) befestigt sind.

2. Vorrichtung nach Anspruch 1, **dadurch gekennzeichnet, dass** es eine Aufnahmeleiste (2) umfasst und dass das Thermoelement auf einer Oberfläche (3) der Leiste (2) angeordnet ist.

3. Vorrichtung nach Anspruch 2, **dadurch gekennzeichnet, dass** die Leiste (2) ein Bereich einer Leiterplatte ist.

4. Vorrichtung nach Anspruch 2, **dadurch gekennzeichnet, dass** die Leiste (2) ein länglicher Bereich einer Leiterplatte ist.

5. Vorrichtung nach Anspruch 2, **dadurch gekennzeichnet, dass** auf der Oberfläche (3) mindestens eine leitfähige Bahn (14) ausgebildet ist, die einen ersten elektrischen Leiter des Thermoelements bildet und mit einem elektrischen Leiter (8) verbunden ist, der ein zweites Bauteil des Thermoelements bildet.

6. Vorrichtung nach Anspruch 2, **dadurch gekennzeichnet, dass** auf der Leiste (2) Metallbahnen (4) zum Versorgen der Heizmittel (5) mit Strom angeordnet sind.

7. Vorrichtung nach Anspruch 6, **dadurch gekennzeichnet, dass** die Heizmittel (5) ein separater elektrischer Widerstand sind, der nahe an einem Ende der Leiste (2) befestigt ist.

8. Vorrichtung nach Anspruch 1, **dadurch gekennzeichnet, dass** es mindestens ein zusätzliches Thermoelement (11) umfasst, das in Reihe mit dem Thermoelement geschaltet ist, um eine Thermokette zu bilden.

9. Vorrichtung nach Anspruch 5, **dadurch gekennzeichnet, dass** der elektrische Leiter (8) ein aus Konstantan hergestellter Draht ist.

10. Vorrichtung nach Anspruch 5, **dadurch gekennzeichnet, dass** der elektrische Leiter (8) eine Konstantanfolie ist.

11. Vorrichtung nach Anspruch 1, **dadurch gekennzeichnet, dass** es in einem Schutzgehäuse (20) eingesetzt ist.

12. Vorrichtung nach Anspruch 1, **dadurch gekennzeichnet, dass** es einen elektronischen Schaltungsteil (12) umfasst, der mit dem Sensor verbunden ist, um das das von dem Thermoelement (10) emittierte elektronische Signal zu detektieren und zu verstärken und die Heizmittel (5) zu versorgen.

13. Vorrichtung nach Anspruch 12, **dadurch gekennzeichnet, dass** der elektronische Schaltungsteil (12) auf einem Leiterplattenfortsatz der Leiste (2) befestigt ist.

14. Verfahren zum Messen des Durchflusses eines Fluids und/oder der Anwesenheit und des Füllstandes einer Flüssigkeit mittels mindestens eines Temperatursensors, der auf einer Aufnahmeleiste (2) befestigt und in den Fluidfluss oder die Flüssigkeit eingetaucht ist, **gekennzeichnet durch** den Schritt: Bereitstellung mindestens eines Thermoelements (10) als den Temperatursensor (1), umfassend mindestens ein Paar von Kontaktstellen;
- Erwärmen lediglich einer Kontaktstelle des Thermoelements **durch** Heizmittel (5), die auf der Leiste (2) befestigt sind und
- Detektieren eines von dem Thermoelement emittierten elektrischen Differenzsignals.

15. Verfahren nach Anspruch 14, **dadurch gekennzeichnet, dass** der Sensor zum Detektieren des Füllstandes eines dichten Fluids oder einer Flüssigkeit in einen Behälter eingetaucht ist.

## Revendications

1. Dispositif de détection (1) destiné à mesurer l'écoulement d'un fluide et/ou la présence et/ou le niveau d'un liquide, qui comprend un capteur de température conçu pour être immergé dans l'écoulement de fluide ou dans le liquide, **caractérisé en ce que** le capteur de température est au moins un thermocouple (10) comprenant au moins une paire de jonctions et **en ce que** le dispositif de détection comprend des moyens de chauffage (5) pour ne chauffer qu'une jonction de ce thermocouple et une bande de support (2) sur laquelle sont montés ledit capteur de température et lesdits moyens de chauffage (5).

2. Dispositif selon la revendication 1, **caractérisé en ce qu'**il comprend une bande de support (2), et **en ce que** ledit thermocouple est logé sur une surface (3) de cette bande (2).

3. Dispositif selon la revendication 2, **caractérisé en ce que** ladite bande (2) est une partie de circuit imprimé.

4. Dispositif selon la revendication 2, **caractérisé en ce que** ladite bande (2) est une partie allongée de circuit imprimé.

5. Dispositif selon la revendication 2, **caractérisé en ce que** sur ladite surface (3), est formée au moins une piste conductrice (14) qui représente un premier conducteur dudit thermocouple et est associée à un conducteur (8) qui représente un second élément dudit thermocouple.

6. Dispositif selon la revendication 2, **caractérisé en ce que** sur ladite bande (2), sont réalisés des pistes métalliques (4) pour alimenter en courant lesdits moyens de chauffage (5).

7. Dispositif selon la revendication 6, **caractérisé en ce que** lesdits moyens de chauffage (5) sont une résistance électrique discrète, montée près d'une extrémité de ladite bande (2).

8. Dispositif selon la revendication 1, **caractérisé en ce qu'**il comprend au moins un autre thermocouple (11), connecté en série audit thermocouple afin de former une thermopile.

9. Dispositif selon la revendication 5, **caractérisé en ce que** le conducteur (8) est un fil fabriqué à partir de constantan.

10. Dispositif selon la revendication 5, **caractérisé en ce que** le conducteur (8) est une feuille de constantan.

11. Dispositif selon la revendication 1, **caractérisé en ce qu'**il est inséré dans un boîtier de protection (20).

12. Dispositif selon la revendication 1, **caractérisé en ce qu'**il comprend une partie de circuit électronique (12) associée au capteur pour détecter et amplifier le signal électronique émis par le thermocouple (10) et alimenter lesdits moyens de chauffage (5).

13. Dispositif selon la revendication 12, **caractérisé en ce que** ladite partie de circuit électronique (12) est montée sur un prolongement de circuit imprimé de la bande (2).

14. Procédé de mesure de l'écoulement d'un fluide et/ou de la présence et du niveau d'un liquide, au moyen d'au moins un capteur de température monté sur une bande support (2) et immergé dans l'écoulement de fluide ou le liquide, **caractérisé par** l'étape consistant à :
- fournir au moins un thermocouple (10) en tant que capteur de température (1), comprenant au moins une paire de jonctions ;
- ne chauffer qu'une jonction dudit thermocouple grâce aux moyens de chauffage (5) montés sur ladite bande support (2) et
- détecter un signal électrique différentiel émis par ledit thermocouple.

15. Procédé selon la revendication 14, **caractérisé en ce que** le capteur est immergé dans un réservoir pour la détection du niveau d'un fluide dense ou d'un liquide.
